# EUROPEAN PATENT APPLICATION

(11) **EP 2 311 582 A1**
(43) Date of publication of application: **20.04.2011**
(21) Application number: 10196845.1
(22) Date of filing: 23.12.2010
(51) Int. Cl.: B09C 1/00, B09C 1/08, B09C 1/10

(54) **Mobile device for soil conditioning**

(30) Priority: 27.01.2010 EP 10151834
(71) Applicant: Commeene, Jean-Paul, 8700 Tielt (BE)
(72) Inventor: Commeene, Jean-Paul, 8700 Tielt (BE)
(74) Representative: Kraft, Henricus Johannes

(57) **Abstract**

The present invention relates to a device and a method for treating soil wherein specific characteristics of the soil, such as the weight and moisture content are measured. More specifically, the present invention relates to a device (1) and a method for conditioning soil, and more particularly non-stabilized soil such as clay or loam.

## Description

### Technical field

The present invention relates to a device and a method for treating soil wherein specific characteristics of the soil, such as the weight and moisture content are measured. More specifically, the present invention relates to a device and a method for conditioning soil, and more particularly non-stabilized soil such as clay or loam.

### Background

Soil conditioning refers to the process of treating soil in such a way that the properties of the soil are adjusted and improved. An example of soil conditioning is the process where soil is decontaminated and the soil pollution is removed or neutralized. For the treatment of the soil, different methods and techniques are available depending among other things, on the location and the properties of the soil.

When treating soils, often additives are added and mixed with the soil to improve the properties. Additives such as ashes, lime and/or cement may be added to improve the stability of the soil. Other possibilities are the addition of substrates such as pesticides and fertilizers to compost soil, thereby improving the properties of the compost. When adding additives to soil, the dosage of these additives is very important. Depending on the amount of soil the right amount of additives needs to be added and mixed with the soil. Therefore weight measurements are performed on the soil to provide the right dosage of the additives. However, when the soil is treated, the composition and the characteristics of the soil may change during the treatment process, depending on the type of soil that is introduced into the process. This provides a major problem as the dosage of additives in the process is fixed at the start of the process and does not vary when certain characteristics of the soil change.

The location of the treatment is also an important factor. Where an in-situ process is preferred the treatment does not require digging out the soil, an on-site process requires digging out the untreated soil and treating the soil on the site, whereas an ex-situ process is a process where the untreated soil is transported to a processing facility where the treatment of the soil occurs.

An on-site conditioning process requires all operations to occur on the site itself, and therefore efficient and mobile equipment is required. The on-site conditioning of especially non-stabilized soil such as clay and/or loam soil is very difficult due to the characteristics of the soil which depend on environmental influences (e.g. humidity) thereby even altering the soil characteristics during the soil treatment processes. It becomes even more difficult when the soil still contains other materials such as stones and/or chunks of concrete. Conventional systems and methods for conditioning soil, and especially for on-site treatment of the soil, are not adapted for the efficient treatment of non-stabilized soil. The lack of an efficient way for the on-site conditioning soil, and particularly non-stabilized soil, provides several problems for the construction industry and civil engineering where the work involves, for instance, groundworks and foundations. Often the raw soil needs to be removed and replaced with soil of a higher quality and better properties, which is an expensive and inefficient process.

The present invention overcomes one or more of the above mentioned problems. The present invention therefore relates to a device and method for the treatment of soil, and in particularly the treatment of non-stabilized soil such as loam or clay. The treatment is adapted such that the addition of additives to the soil is controlled in an accurate and flexible way. Furthermore, the present invention allows the treatment of soils which are hard to treat while still providing a system which is mobile and may be used in an on-site process. The device in accordance with the current invention combines a large treatment capacity with a compact system allowing the transportation of the system to the site where the soil requires treatment.

### Summary

The present invention relates to a device for the treatment of soil. The treatment is adapted such that the addition and dosage of additives to the soil is controlled and regulated in an accurate and flexible way. The present invention therefore allows the treatment of soils which are hard to treat while still providing a system which is mobile and may be used in an on-site process. The device in accordance with the current invention combines a large treatment capacity with a compact system allowing the transportation of the system to the site where the soil requires treatment. Furthermore, the present invention relates to methods for treating soils.

The present invention relates to a device for treating soil, and more specifically for treating non-stabilized soil, comprising means for transporting soil, means for performing weight measurements on untreated soil, means for performing humidity measurements on the untreated soil and a blending system for mixing additives, such as preferably ashes, lime and/or cement, with said soil, wherein said means for performing weight and humidity measurements on said untreated soil comprise at least one weight sensor and at least one moisture sensor. More particularly, said device for treating soil further comprises a soil storage container for the collection of untreated soil.

The present invention relates in a particular embodiment to a device according to the present invention, wherein said device comprises means for receiving data information from said weight and/or humidity measurements and regulating the dosage of additives to said blending system. The device according to the present invention is therefore provided with any type of means for performing this type of regulation and for instance a computer may be used for receiving the information from the sensors and regulating the additive dosage accordingly. As a non-limiting example, a Programmable Logic Controller (PLC) or programmable controller is used for performing the regulation. A PLC refers to a digital computer used for automation of electromechanical processes, such as control of machinery. PLCs are used in many industries and machines. Unlike general-purpose computers, the PLC is designed for multiple inputs and output arrangements, extended temperature ranges, immunity to electrical noise, and resistance to vibration and impact. Programs to control machine operation are typically stored in battery-backed or non-volatile memory. A PLC is typically a real time system since output results must be produced in response to input conditions within a bounded time, otherwise unintended operation will result.

The present invention provides that the weight and/or humidity sensors are positioned in the device according to the present invention such that weight and/or humidity measurements are performed on the soil e.g. after loading the soil into the device and prior to feeding the soil into the blending system. The weight and/or humidity measurements therefore provide on-line information regarding the flow rate, weight and humidity of the soil just prior to the injection of the soil into the blending system, enabling the on-line control of the soil properties and the on-line and immediate adaptation of the additive dosage to the blending system. Consequently, the device according to the present invention allows the adaptation of the additive dosage depending on the weight and/or humidity measurements of the soil treated within the conditioning device. As it occurs very often that the characteristics of the soil change during the operation of the device, for instance due to the fact that during the operation of the device new soil is loaded into the device , the new soil showing different properties, the device according to the present invention provides a high flexibility and allows the adaptation of the additive dosage depending on the to be treated soil and variations of the soil characteristics.

For instance, when during the operation of the device according to the present invention new soil is added to the device, the new soil having a higher moisture content, the humidity and/or weight sensors will automatically monitor this higher moisture content of the soil and provide adaptations to the additive dosage accordingly.

Also the on-line weight and/or humidity measurements in the device according to the present invention allow the prevention of additive spillage. As the additives are highly valuable materials, the on-line weight measurements provide that when the feed of soil stops, the weight measurements will show a reduction of the flow rate of the soil or even a termination of the flow rate of the soil, thereby providing information to the additive dosage system to reduce or even stop the feed of additives to the blending system, thereby avoiding the spillage of highly valuable materials.

The present invention also relates to a device according to the present invention, wherein said device comprises means for sieving and/or refining said untreated soil prior to blending said soil with said additives.

In another embodiment the present invention relates to a method for treating soil, and more particularly non-stabilized soil, comprising the steps of:
(a) loading untreated soil in a device according to the present invention;
(b) optionally sieving and/or refining said untreated soil;
(c) measuring the weight and moisture content of said untreated soil from step (a) and/or said sieved and/or refined soil from step (b); and
(d) blending said untreated soil from step (a) and/or said sieved and/or refined soil from step (b) with additives in a blending system.

The present invention further relates to a device or method according to the present invention, wherein said soil treatment comprises the conditioning, refining or improving soil, such as, for instance, the cleaning, purification, stabilization, fertilization, decontamination or establishment of proper chemical balance of said soil.

The present invention further relates to a device for treating soil comprising means for exporting or transmitting information, preferably wireless, relating to the functioning of said device and/or the weight and/or humidity measurements of said device, from said device to an information carrier or computer device, preferably located outside said device.

These and further aspects and embodiments of the invention are hereunder further explained in the following sections and in the claims, as well as illustrated by non-limiting figures.

### Short description of the figures

Figure 1 schematically illustrates a view of the device according to an embodiment of the present invention.
Figure 2 schematically illustrates a detailed side view of the device according to an embodiment of the present invention.
Figure 3 schematically illustrates the sieving table of the device according to an embodiment of the present invention.
Figure 4 illustrates specific shapes of the sieving discs according to an embodiment of the present invention.
Figure 5 illustrates a graphical representation of the soil production data according to an embodiment of the present invention.
Figure 6 schematically illustrates a flow diagram of the actions performed by the device according an embodiment of the present invention.

### Detailed description of the invention

Before the present method and devices used in the invention are described, it is to be understood that this invention is not limited to particular methods, components, or devices described, as such methods, components, and devices may, of course, vary. It is also to be understood that the terminology used herein is not intended to be limiting, since the scope of the present invention will be limited only by the appended claims.

Unless defined otherwise, all technical and scientific terms used herein have the same meaning as commonly understood by one of ordinary skill in the art to which this invention belongs. Although any methods and materials similar or equivalent to those described herein may be used in the practice or testing of the present invention, the preferred methods and materials are now described.

As used herein, the singular forms "a", "an", and "the" include both singular and plural referents unless the context clearly dictates otherwise. The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of". The recitation of numerical ranges by endpoints includes all numbers and fractions subsumed within the respective ranges, as well as the recited endpoints. The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1 % or less of and from the specified value, insofar such variations are appropriate to perform in the disclosed invention. It is to be understood that the value to which the modifier "about" refers is itself also specifically, and preferably, disclosed. All documents cited in the present specification are hereby incorporated by reference in their entirety.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention.

The present invention relates to a device for the treatment of soil. The treatment is adapted such that the addition and dosage of additives to the soil is controlled and regulated in an accurate and flexible way. The present invention therefore allows the treatment of soils which are hard to treat while still providing a system which is mobile and may be used in an on-site process. The device in accordance with the current invention combines a large treatment capacity with a compact system allowing the transportation of the system to the site where the soil requires treatment. Furthermore, the present invention relates to methods for treating soils.

As used herein, the term "soil" refers in general to all known types of earth typically comprising rock, mineral particles and/or organic matter. Soil is a natural body comprised of solids such as minerals and organic matter, liquid, and gases. The soil solids are various components such as sand, silt and clay, and depending on the composition the characteristics of the soil and the soil behavior, including the retention capacity for nutrients and water, may alter. Sand and silt are the products of physical weathering, while clay is the product of chemical weathering. Clay content has retention capacity for nutrients and water. Clay soils therefore resist wind and water erosion better than silty and sandy soils, because the particles are more tightly joined to each other.

Different types of soil refer to the different sizes of mineral particles in a particular soil sample. Soil is made up in part of finely ground rock particles, grouped according to size as sand, silt and clay. Each size plays a significantly different role. For example, the largest particles, sand, determine aeration and drainage characteristics, while the tiniest, sub-microscopic clay particles, are chemically active, binding with water and plant nutrients. The ratio of these sizes determines soil type: clay, loam, clay-loam, silt-loam, and so on. In addition to the mineral composition of soil, humus also plays a crucial role in soil characteristics and fertility for plant life. Soil may be mixed with larger aggregate, such as pebbles or gravel. In view of the present invention compost may also be regarded as soil.

The treatment of soil as referred to herein, relates in general to all known types of soil treatment known in the art and more specifically to treatments where the properties of the soil are altered. Soil treatments may include conditioning, refining or improving soil, such as, for instance, the cleaning, purification, stabilization, fertilization, decontamination or establishment of altered chemical balance of said soil.

Polluted soil, caused by the presence of man-made chemicals such as petroleum hydrocarbons, solvents, pesticides, lead and other heavy metals in the soil, may require cleaning, decontamination and/or purification. Cleanup or remediation of polluted soil depends on the type of pollution and may, for instance, require containment of the soil contaminants by mixing the soil with additives.

Also for placing foundations and performing groundworks, some soil types may cause problems. Clay and loam soils are referred to as non-stabilized soils which may create problems for the building and road construction industry. It is well known that non-stabilized soils require soil conditioning by mixing the soil with, for instance, ashes, lime, gypsum and/or cement to perform the stabilization.

Another example for the treatment of soils is the fertilization of soils by the addition of humus of compost, or the addition of fertilizers, pesticides and other chemical substances to improve the quality of compost or other soils.

As used herein the term "additives" refers to substrates that alter the physical and/or chemical properties of the soil. Typical additives for the decontamination of polluted soils are binder components that encapsulate the contaminants and prevent that the polluting components leach from the soil. For the conditioning of soils, additives, such as wood ashes, fly ashes, paper ashes, other types of ashes, lime, gypsum and/or cement, may be used. For the fertilization of soils, additives, such as humus or compost, fertilizers, pesticides and other chemical substances, to improve the quality of compost or other soils may be used.

The present invention relates to a device for treating soil, and more specifically for treating non-stabilized soil, comprising means for transporting soil, means for performing weight measurements on untreated soil, means for performing humidity measurements on untreated soil and a blending system for mixing additives, such as, ashes, lime and/or cement, with said soil, wherein said means for performing weight and humidity measurements on said untreated soil comprise at least one weight sensor and at least one moisture sensor.

More particularly, said device for treating soil further comprises a soil storage container for the collection of untreated soil.

The soil storage container provided on the device according to the present invention enables the collection of untreated soil. Said soil storage container is preferably a separate soil storage container. The untreated soil is fed into the device using methods and devices well known in the art, such as, for instance, a loader or shovel.

After loading the untreated soil into the device and preferably into the soil storage container, weight and/or humidity measurements are performed on the soil using means for measuring weight and/or humidity or moisture content. The weight and/or humidity measurements of the soil provide an indication of the amount of additives that are required to be mixed with the soil in the blending system.

The weight of the soil provides an indication regarding, for instance, the quantity of soil that is treated and/or the flow rate of the soil. For instance, an increased flow rate requires a larger amount of additives to be added to the soil, whereas a reduced flow rate requires a smaller amount of additives to be added to the soil in the blending system.

A measurement of the moisture content or humidity of the soil provides an important indication of the characteristics of the soil. Whereas a soil with an increased moisture content often requires a larger amount of additives to be added to the soil, a reduced moisture content in general requires a smaller amount of additives to be added to the soil in the blending system.

The blending system provided in the device according to the present invention refers to a blending chamber having at least one mixing rotor positioned to mix the incoming soil with incoming additives.

The present invention further relates to a device according to the present invention, wherein said device further comprises means for dosing additives to said blending system. Preferably said device comprises one or more additive storage containers for the storage of additives. Said additive storage containers enable the storage of different kinds of additives to be used in the device according to the present invention. Furthermore, the additive storage containers may be provided with means enabling the dosage of additives to the blending system. The additives may be added from the additive storage containers to the blending system using any method known in the art such as for instance using dosage valves, using gravity as a driving force, or using propellers or pumps such as the Archimedes screw or other screw propellers, to provide the additives into the blending system in an efficient and controllable manner allowing the accurate introduction of the additives into the blending chamber.

A skilled person will appreciate that the regulation of the dosage of the additives may either be regulated by reducing or enhancing the amount of additives added to the blender or by enhancing or decreasing the amount of untreated soil introduced into the blender.

In a particular embodiment the present invention relates to a device for treating soil, and more specifically for treating non-stabilized soil, wherein said device comprises means for exporting or transmitting information, relating to the functioning of said device, from said device to an information carrier or computer device. More particularly said means for exporting or transmitting information comprises means commonly known in the art for either exporting information from said device to an external data carrier. For instance, wireless communication may be used for exporting or transmitting said information. Also said information may be stored into the device according to the present invention and the information may be exported or transmitted using commonly known data carriers, such as, for instance, but not limited to flash cards, multimedia cards, smart media cards, memory sticks and on USB sticks.

Said information relating to the functioning of said device according to this particular embodiment relates to useful information regarding the soil treatment. It comprises information regarding the functioning of the device and may comprise information, such as, but not limited to, data regarding the device used for treating the soil, the date and time frame of the functioning of the machine, the amount of soil treated, the amount of additives used during the treatment, the weight and/or humidity measurements on the soil, the amount of additives left, any errors or disfunctions that may have occurred and/or the location of the device. The information may be provided in a continuous, an hourly, daily or weekly or other time frame. The information would enable a third party, such as a supervisor of the construction site, to obtain valuable information regarding the functioning of the device as well as provide an electronic logbook that would contain all relevant information regarding the working of the device and/or the treated soil. More particularly, the electronic logbook is a computer based file which recorded the states, events or simply conditions used for the device according to the present invention. In case of discussions and problems relating to the construction using treated soil, the electronic logbook would provide valuable information relating to the functioning of the device and/or the treated soil used.

Moreover, whereas when working with a known device for treating soil, soil samples need to be sampled on a frequent basis, the use of means that exporting or transmitting information relating to the functioning of the device provide a considerable reduction of the amount of samples that need to be sampled. As detailed production reports are obtained containing information regarding to the operation of the soil treatment device it is no longer necessary to take samples on an hourly basis or after the treatment of a small amount of soil. It is estimated that the amount of soil samples that need to be taken and analyzed can be reduced leading to a more economical process and device.

Furthermore, the information relating to the functioning of said device may also contain information regarding the amount of additives used and the amount of additives remaining in the device. This would enable a person supervising the construction to timely order new additives, without the device running out of additives. According to a particular embodiment the device according to the present invention comprises additive storage containers provided with commonly known means for measuring the amount of additives in the additive storage containers and means for transmitting said information.

In a particular embodiment according to the present invention, the device according to the present invention may further comprise means for transmitting GPS signals to a computer server, thereby providing information regarding the location of said device. Said means for transmitting GPS signals may for instance be a GPS tracking system sending out a continuous signal or transmitting a GPS signal upon powering up the device or powering off the device. The means for transmitting GPS signals would provide information to a supervisor regarding the location of the device. This is especially useful for highly expensive and mobile devices such as the devices according to the present invention as these devices will be more prone to theft. The presence of a GPS locator will allow the owner to locate the device at any time, thereby making the device less attractive for thieves.

In a particular embodiment, the present invention relates to the use of means for exporting or transmitting information relating to the functioning and weight and/or humidity measurements of a soil treatment device, from said soil treatment device to an information carrier or computer device, wherein said soil treatment device comprises means for performing weight and/or humidity measurements on untreated soil, wherein said means for performing weight and/or humidity measurements on said untreated soil comprise at least one weight and/or moisture sensor.

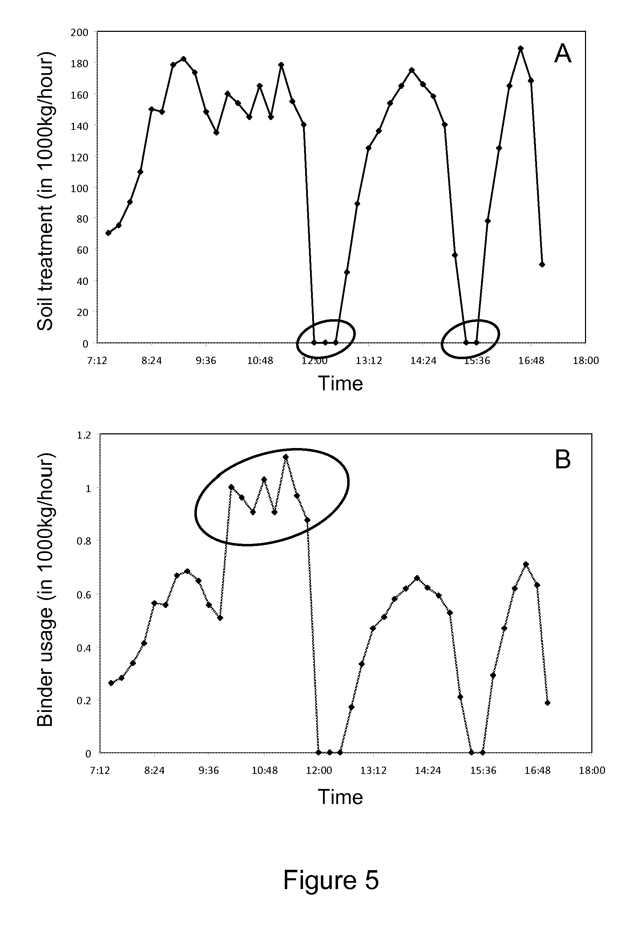

Figure 5 show a graphical representation of the soil production of a machine over a single day. Figure 5A shows the amount of soil treated during the entire day, including the fact that the machine stopped operating at two time points during the day (encircled regions). Figure 5B shows the amount of binder used during the same time period. From this information it can be seen that the graphs follows the graph in figure 5A, with the exception of the encircled region. During the working of the device the soil measurements provided that the soil quality differed per lot, in that various lots of soil required a larger amount of binder to be added to the soil, than other lots. The device enhanced during operation automatically the amount of binder added to the soil.

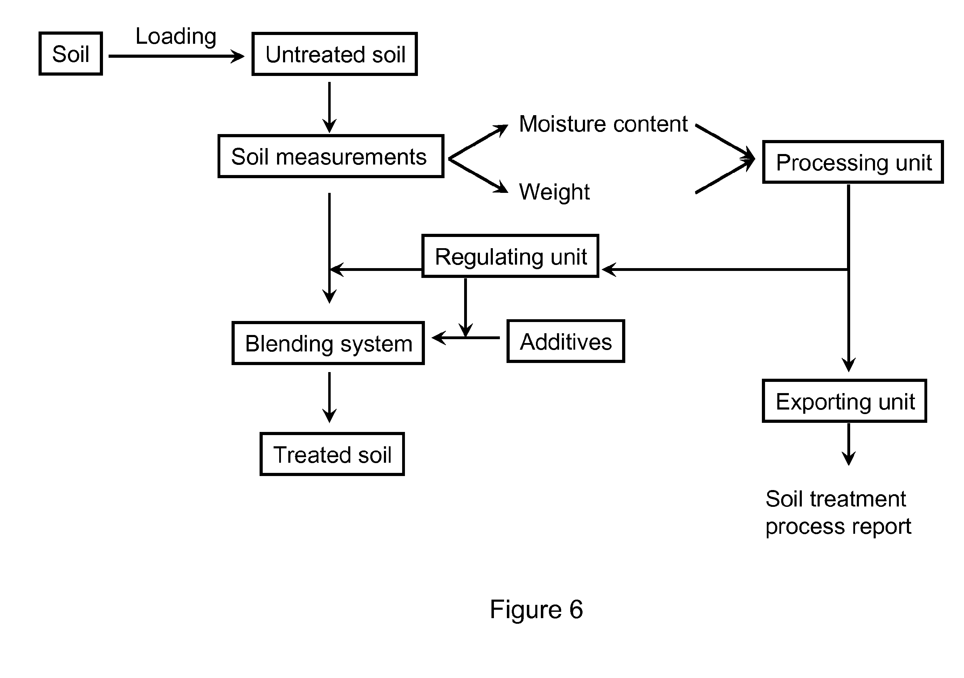

Figure 6 shows a flow diagram of the actions performed by the device according an embodiment of the present invention wherein soil is loaded onto the device, moisture and weight measurements are performed which are used to optimize the mixing of the untreated soil with additives resulting in the treated soil. The information with regard to the soil processing is exported and provides valuable information with regard to the functioning of the device.

The present invention also relates to a device according to the present invention, wherein said means for performing weight and/or humidity measurements on the soil comprise at least one weight sensor and at least one moisture sensor.

For use in the device according to the present invention, any type of weight sensors known in the art may be used, preferably weight sensors that can measure weight in a continuous way thereby providing an online weight measurement of the soil. More preferably one or more load cell(s) are used as weight sensors. A load cell is a transducer which converts force into a measurable electrical output. Although there are many varieties of load cells, strain gage based load cells are the most commonly used type.

For use in the device according to the present invention, any type of humidity or moisture content sensors known in the art may be used, preferably moisture sensor enabling the measurement of the water content in a continuous way thereby providing an online moisture content measurement of the soil. Preferably remote moisture sensing devices or devices using optical moisture measurements are used. Remote moisture sensing devices include satellite, radar (microwaves), and other non-contact techniques. The remote sensing of soil moisture depends on the measurement of electromagnetic energy that has been either reflected or emitted from the soil surface. The intensity of this radiation with soil moisture may vary depending on dielectric properties, soil temperature, or some combination of both. For active radar, the attenuation of microwave energy may be used to indicate the moisture content of porous media because of the effect of moisture content on the dielectric constant. Thermal infrared wavelengths are commonly used for this measurement. Devices using optical moisture measurements refer to methods measuring changes in the characteristics of light due to soil characteristics. These methods involve the use of polarized light, fiber optic sensors, and near-infrared sensors. Polarized light is based on the principle that the presence of moisture at a surface of reflection tends to cause polarization in the reflected beam. Fiber optic sensors are based on a section of unclad fiber embedded in the soil. Light attenuation in the fiber varies with the amount of soil water in contact with the fiber because of its effect on the refractive index and thus on the critical angle of internal reflection. Near-infrared methods depend on molecular absorption at distinct wavelengths by water in the surface layers. Typical moisture sensors for use in the devices according to the present invention are, for instance, near infra red moisture sensors, capacitive moisture sensors, microwave moisture sensors, neutron moisture sensors and the like.

The present invention relates in a particular embodiment to a device according to the present invention, wherein said device further comprises means for receiving data information from said weight and/or humidity measurements and regulating the dosage of additives to said blending system. The device according to the present invention is therefore provided with means for performing this type of regulation which may be any type such as for instance a computer may be used for receiving the information from the sensors and regulating the additive dosage accordingly. As a non-limiting example, a Programmable Logic Controller (PLC) or programmable controller is used for performing the regulation. A PLC refers to a digital computer used for automation of electromechanical processes, such as control of machinery. PLCs are used in many industries and machines. Unlike general-purpose computers, the PLC is designed for multiple inputs and output arrangements, extended temperature ranges, immunity to electrical noise, and resistance to vibration and impact. Programs to control machine operation are typically stored in battery-backed or non-volatile memory. A PLC typically a real time system since output results must be produced in response to input conditions within a bounded time, otherwise unintended operation will result.

The present invention provides that the weight and/or humidity sensors are positioned in the device according to the present invention such that weight and/or humidity measurements are performed on the soil after loading it into the device and prior to feeding the soil into the blending system. The weight and/or humidity measurements therefore provide on-line information regarding the flow rate and humidity of the soil just prior to the injection of the soil into the blending system, enabling the on-line control of the soil properties and the on-line and immediate adaptation of the additive dosage to the blending system. Consequently, the device according to the present invention allows the adaptation of the additive dosage depending on the weight and/or humidity measurements of the soil treated within the conditioning device. As it occurs very often that the characteristics of the soil change during the operation of the conditioning device, for instance due to the fact that during the operation of the device new soil is loaded into the device, the new soil showing different properties, the device according to the present invention provides a high flexibility and allows the adaptation of the additive dosage depending on the to be treated soil and variations of the soil characteristics.

For instance, when during the operation of the device according to the present invention new soil is added to the device, the new soil having a higher moisture content, the humidity sensors will automatically monitor this higher moisture content of the soil and provide adaptations to the additive dosage accordingly.

Also the on-line weight and/or humidity measurements in the device according to the present invention allow the prevention of additive spillage. As the additives are highly valuable materials, the on-line weight measurements provide that when the feed of soil stops, the weight measurements will show a reduction of the flow rate of the soil or even a termination of the flow rate of the soil, thereby providing information to the additive dosage system to reduce or even stop the feed of additives to the blending system, thereby avoiding the spillage of highly valuable materials.

The present invention also relates to a device according to the present invention, wherein said device further comprises means for sieving and/or refining said untreated soil prior to blending said soil with said additives.

Depending on the texture of the untreated soil, it may be required to pass the untreated soil through sieving and/or refining means prior to blending the soil with additives. When the untreated soil already provides a fine texture with small granules and the absence of rocks and stones, no sieving would be required. However, as is generally the case, the untreated soil may contain large chunks of soil as well as stones and rocks. Therefore, the soil may require sieving especially when using non-stabilized soils. Whereas any type of sieving mechanism may be used for this purpose, the inventors have found that a sieving table containing rotating sieving discs is especially useful in the device according to the present invention.

The sieving table as used in the device according to the present invention comprises a series of axes on which sieving discs are provided. The axes may provide a rotating movement, thereby making the sieving discs rotate. Preferably at least 2 axes are consecutively provided. More preferably between 2 and 100 axes are provided. The maximum number of axes provided in the sieving table is unlimited. The person skilled in the art will know that a higher amount of axes provided with sieving discs will increase the sieving capacity of the sieving table. In a specific embodiment of the present invention, the sieving table is provided with 8, 9, 10, 11, 12, 13, 14, 15, 16, 17, 18, 19, 20, 21, 22, 23, 24, 25, 26, 27, 28, 29 or 30 axes. Optionally the sieving table may be tilted upwards to increase the sieving capacity. The tilt of the sieving table may vary between 0° and 45°, preferably between 0° and 40° and more preferably between 0° and 35°. When the tilt of the sieving table is 0°, the sieving table is positioned horizontally.

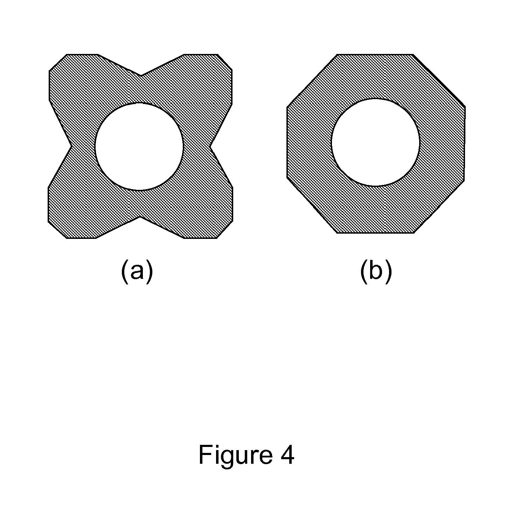

The sieving discs are provided with a central hole through which the axes are attached and which provides the rotation to the sieving discs. The sieving discs may have any kind of shape, such as for instance round shape, star shape, triangular shape, quadrangle shape, pentagonal shape, hexagonal shape, octagon shape or decagon shape. Figure 4 show sieving discs having (a) a star shape and (b) a hexagonal shape. Optionally the sieving discs pass through a combing mechanism to remove soil clutched to the sieving discs. The combing mechanism avoids the sieving discs to be blocked by rocks or stones that are immobilized between the sieving discs.

In order to maintain the flexibility of the device according to the present invention, the rotating axes with sieving discs are removable, thereby providing a highly flexible and adaptive system depending on the characteristics of the soil that requires treatment. Also the distance between the sieving discs on the rotating axe is adaptive and may be varied according to the characteristics of the soil that requires treatment.

Therefore the present invention further relates to a device according to the present invention, wherein said sieving and/or refining means consist of a sieving table comprising at least 3 rotating axes onto which sieving discs are attached.

The present invention further relates to a device according to the present invention, wherein said device further comprises a soil storage container, for the collection of untreated soil and transport means for transporting said untreated soil from said soil storage container to said sieving and/or refining means and transport means for transporting said sieved and/or refined soil from said sieving and/or refining means to said blending system.

Said transporting means according to the present invention refer to any transporting means suitable for use in the device according to the present invention, such as for instance conveyer belts.

The present invention relates in a specific embodiment to a device according to the present invention, wherein said means for performing weight and/or humidity measurements measure the weight and/or humidity of said sieved and/or refined soil.

When the untreated soil requires sieving prior to mixing the soil with the additives, the inventors have found that the weight and/or humidity measurements should measure the weight and/or humidity of said sieved and/or refined soil. More specifically the weight and/or humidity measurements occur during the transport of the sieved and/or refined soil from the sieving mechanism to the blending system, and preferably said measurements occur on the transport means transporting the sieved and/or refined soil from the sieving table to the blending system. This provides accurate and up to date information of the soil that enters the blending system, thereby enabling an accurate control of the dosage of the additives to the blending system.

The present invention further relates to a device according to the present invention, wherein said device comprises a frame supporting all parts of said device and additionally comprises an engine, a fuel tank, a hydraulics system, a computer or PLC and/or an electrical board.

By providing the device according to the present invention with a frame for supporting all elements of the conditioning device, and also including an engine, fuel tank, hydraulics system, a computer or PLC and/or an electrical board, the device according to the present invention is a fully integrated system enabling the efficient transportation and efficiency of the conditioning device.

The present invention relates to a mobile device enabling the transportation of the device to the location where the soil requires treatment. Therefore, all components of the device according to the present invention are compact while still maintaining an increased efficiency and the ability to process difficult soils such as non-stabilized soils containing for instance rocks, stones and/or chunks of concrete. Whereas the device itself may be provided with transportation means such as wheels or continuous tracks, the compactness of the device also enables loading it on transportation means or mounting the device on a trailer chassis having a tow bar and wheel bogie whereby the device can be easily transported from site to site. To increase the mobility of the device according to the present invention, specific parts of the device may be folded. For instance, the conveyer for removing treated soil, the soil storage container and/or the work platform may be folded to decrease the dimension of the device, and thereby increasing the mobility.

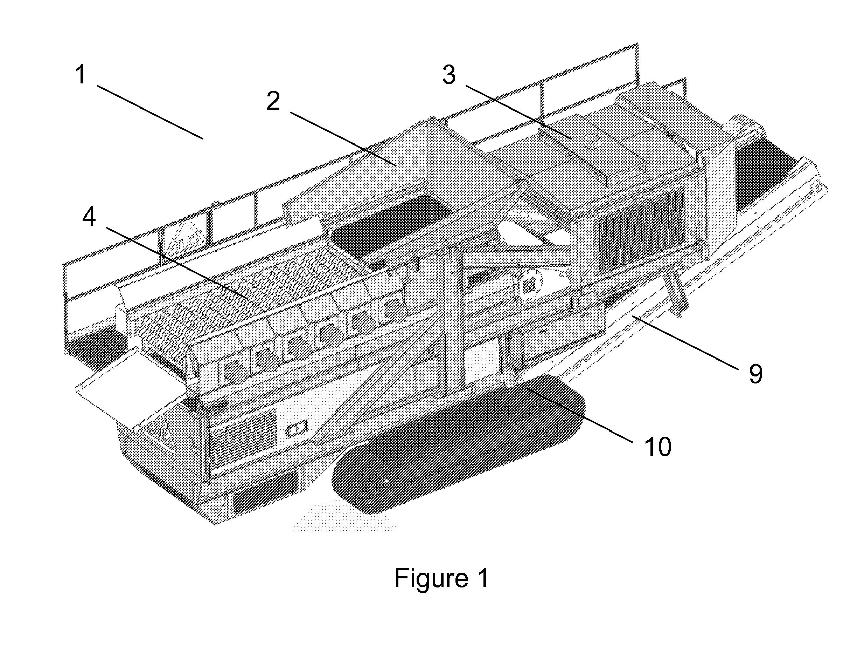

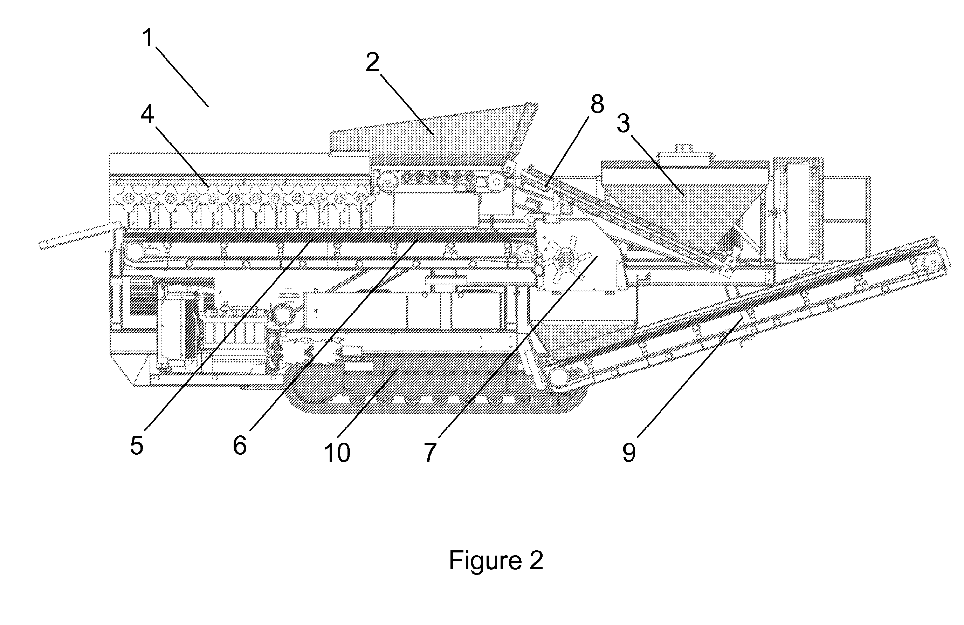

Figures 1 and 2 schematically illustrate the device (1) according to an embodiment of the present invention wherein the device (1) comprises a soil storage container (2), for the collection of untreated soil, an additive storage container (3), for storing additives, a sieving table (4) upon which untreated soil is sieved, the sieved soil falls through the sieving table (4) upon a conveyer belt (5) transporting the sieved soil to the blending system (7). During the transport of the sieved soil to the blending system (7) the weight and/or humidity of the sieved soil are measured using weight cells and/or a moisture sensor (6). In the blending system (7) the sieved soil is mixed with additives provided from the additive storage container (3) using a screw propeller (8). The treated soil leaving the blending system (7) is removed from the device by a conveyer for the treated soil.

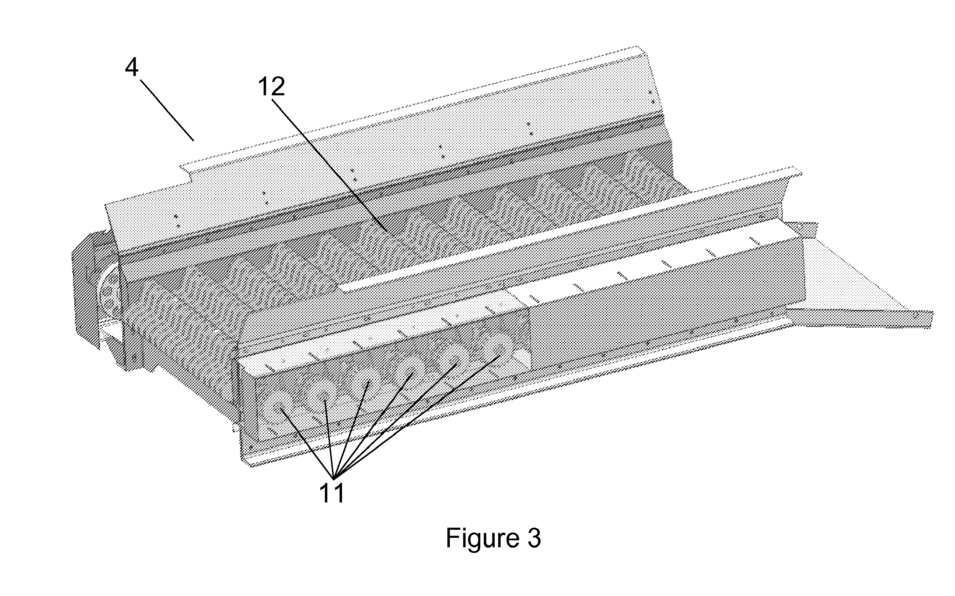

Figure 3 schematically illustrates the sieving table (4) of the device according to an embodiment of the present invention. The sieving table is provided with a series of rotating axes (11) upon which sieving discs (12) are provided.

In another embodiment the present invention relates to a method for treating soil, and more particularly non-stabilized soil, comprising the steps of:
(a) loading untreated soil in a device according to the present invention, said device preferably comprising a soil storage container;
(b) optionally sieving and/or refining said untreated soil;
(c) measuring the weight and moisture content of said untreated soil from step (a) and/or said sieved and/or refined soil from step (b); and
(d) blending said untreated soil from step (a) and/or said sieved and/or refined soil from step (b) with additives in a blending system
wherein the measurements according to step (c) regulate the amount of additives blended with said untreated soil and/or said sieved and/or refined soil.

Alternatively, instead of regulating the amount of additives blended with said untreated soil, the method may also provide that the wherein the measurements according to step (c) regulate the velocity of the transport system, thereby reducing or enhancing the amount of untreated soil that enters the blender while the amount of additives added to the blender remains constant.

The method according to the present invention provides that in case that the untreated soil is sufficiently fine, the soil is uploaded and the weight and/or humidity characteristics the soil are measured followed by the mixing of the soil with additives. In case the untreated soil comprises large chunks of clutched soil that require refining and sieving, the soil is uploaded, sieved and the weight and/or humidity characteristics the sieved soil are measured followed by the mixing of the sieved soil with additives. The measurement of the soil characteristics after sieving on the sufficiently fine soil is important as the inventors have found that those characteristics may determine the amount of additives that need to be added to the bending system.

The present invention further relates to a method according to the present invention, wherein step (d) comprises the steps (d1) dosing additives to said blending system and (d2) blending said untreated soil from step (a) and/or said sieved and/or refined soil from step (b) with additives.

The present invention further relates to a method according to the present invention, wherein data information from said weight and moisture content measurements in step (c) actively influences the dosage of additives in step (d1). The information of the measurements in step (c) are important and define whether an adaptation of the dosage of additives in step (d1) is required. A higher flow rate and/or higher humidity requires an increased dosage of additives whereas a reduced flow rate of lower humidity requires an decreased dosage of additives

The present invention further relates to a method according to the present invention, wherein step (b) comprises transporting said untreated soil over a sieving system provided with one or more sieving discs.

The present invention further relates to a device or method according to the present invention, wherein said soil treatment comprises the conditioning, refining or improving soil, such as for instance the cleaning, purification, stabilization, fertilization, decontamination or establishment of proper chemical balance of said soil. The present invention further relates to soil obtained according to the method of the present invention.

In a particular embodiment, the method according to the present invention further comprises a step wherein information relating to the soil treatment method and the weight and/or humidity measurements of the soil are exported or transmitted to an information carrier or computer device.

## Claims

1. Device for treating soil comprising means for transporting soil, means for performing weight measurements on untreated soil, means for performing humidity measurements on untreated soil and a blending system for mixing additives with said soil, wherein said means for performing weight and humidity measurements on said untreated soil comprise at least one weight sensor and at least one moisture sensor.

2. Device according to claim 1, wherein said device further comprises one or more additive storage containers for the storage of additives and/or means for dosing additives to said blending system.

3. Device according to claim 1 or 2, wherein said device further comprises means for exporting or transmitting information relating to the functioning of said device and/or the weight and/or humidity measurements of said device, from said device to an information carrier or computer device.

4. Device according to any of claims 1 to 3, wherein said device further comprises means for receiving data information from said weight and humidity measurements and for regulating the dosage of additives to said blending system.

5. Device according to any of claims 1 to 4, wherein said device further comprises means for sieving and/or refining said untreated soil prior to blending said soil with said additives.

6. Device according to claim 5, wherein said device further comprises a soil storage container, for the collection of untreated soil and transport means for transporting said untreated soil from said soil storage container to said sieving and/or refining means and transport means for transporting said sieved and/or refined soil from said sieving and/or refining means to said blending system.

7. Device according to claim 5 or 6, wherein said means for performing weight and humidity measurements measure the weight and humidity of said sieved and/or refined soil.

8. Device according to any of claims 5 to 7, wherein said sieving and/or refining means consist of a sieving table comprising at least 3 rotating axes onto which sieving discs are attached.

9. Use of means for exporting or transmitting information relating to the functioning of a soil treatment device and/or the weight and/or humidity measurements conducted by said soil treatment device, from said soil treatment device to an information carrier or computer device, wherein said soil treatment device preferably comprises means for performing weight and/or humidity measurements on untreated soil, wherein said means for performing weight and/or humidity measurements on said untreated soil comprise at least one weight and/or moisture sensor.

10. Method for treating soil, and more particularly non-stabilized soil, comprising the steps of:
(a) loading untreated soil in a device according to any of claims 1 to 8;
(b) optionally sieving and/or refining said untreated soil;
(c) measuring the weight and moisture content of said untreated soil from step (a) and/or said sieved and/or refined soil from step (b); and
(d) blending said untreated soil from step (a) and/or said sieved and/or refined soil from step (b) with additives in a blending system,
wherein the measurements according to step (c) regulate the amount of additives blended with said untreated soil and/or said sieved and/or refined soil.

11. Method according to claim 10, wherein step (d) comprises the steps (d1) dosing additives to said blending system and (d2) blending said untreated soil from step (a) and/or said sieved and/or refined soil from step (b) with additives.

12. Method according to claim 11, wherein data information from said weight and moisture content measurements in step (c) actively influences the dosage of additives in step (d1).

13. Method according to any of claims 10 to 12, wherein step (b) comprises transporting said untreated soil over a sieving system provided with one or more sieving discs.

14. Method according to any of claims 10 to 13, wherein said soil treatment comprises the conditioning, refining or improving soil, such as for instance the cleaning, purification, stabilization, fertilization, decontamination or establishment of proper chemical balance of said soil.

15. Soil obtained according to the method of any of claims 10 to 14.
